# DEMANDE DE BREVET EUROPEEN

(11) **EP 0 749 852 A1**
(43) Date de publication de la demande: **27.12.1996**
(21) Numéro de dépôt: 96401370.0
(22) Date de dépôt: 21.06.1996
(51) Int. Cl.: B60B 17/00

(54) **Roue élastique, en particulier pour un véhicule ferroviaire urbain**

(30) Priorité: 22.06.1995 FR 9507481
(71) Demandeur: HUTCHINSON, F-75008 Paris (FR)
(72) Inventeur: Krajewski, Richard, 78480 Verneuil (FR)
(74) Mandataire: Orès, Bernard

(57) **Abrégé**

Roue élastique, en particulier pour véhicule ferroviaire urbain, cette roue étant constituée d'une jante (3) entourée d'un bandage (5), ces deux éléments (3, 5) étant solidarisés entre eux par des plots (7) régulièrement répartis autour de la jante (3), insérés à force dans la jante (3) et dans le bandage (5), et qui sont fabriqués en un matériau présentant des propriétés élastiques, caractérisée en ce que des moyens de renfort (10) sont noyés dans les plots (7) et agencés de manière à ce que le matériau des plots (7) travaille en mode de cisaillement dans une direction radiale pour augmenter la souplesse des plots dans cette direction et en mode de compression dans une direction transversale pour réduire la souplesse des plots dans cette direction.

## Description

La présente invention concerne une roue élastique, en particulier pour un véhicule ferroviaire urbain, cette roue étant constituée d'une jante entourée d'un bandage, ces deux éléments étant solidarisés entre eux par des plots régulièrement répartis autour de la jante, insérés à force dans la jante et dans le bandage, et qui sont fabriqués en un matériau présentant des propriétés élastiques.

D'une manière générale, ces plots sont constitués en un matériau élastomère, comme du caoutchouc par exemple, et leur élasticité est destinée à réduire l'intensité des vibrations transmises aux riverains de la voie ou aux passagers par le contact fer sur fer entre le bandage de la roue et le rail, ces vibrations générant des bruits dus au roulement et/ou au crissement des roues.

Cependant, de tels plots permettent d'obtenir une plus grande élasticité dans une direction transversale perpendiculaire à la voie ou parallèle à l'axe de l'essieu que dans une direction radiale, ce qui entraîne une trop grande liberté de mouvement du bandage par rapport à la jante de la roue dans le sens transversal, et il en résulte une trop grande instabilité du véhicule. Par ailleurs, la flexibilité des plots dans la direction radiale s'avère insuffisante pour filtrer les chocs dus au roulement sur le rail.

Selon le document DE-C-32 45 775, chaque plot est constitué par un corps creux qui à la forme d'une boîte ouverte sur sa face située en regard du bandage de roulement. Des renforts métalliques sont logés dans le corps creux, disposés suivant les diagonales de ce dernier et noyés dans le caoutchouc qui remplit le corps creux. Le guidage transversal de la roue suivant un axe sensiblement parallèle à l'axe de l'essieu, est obtenu par l'action des renforts métalliques dont la raideur propre empêche les mouvements relatifs entre la jante et le bandage de roulement. La souplesse de la roue suivant un axe radial, perpendiculaire à l'axe de l'essieu, est obtenue par le travail en compression de la masse de caoutchouc, alors que les renforts métalliques ne jouent qu'un rôle très secondaire.

Cependant, le travail en compression de la masse en caoutchouc ne procure pas une souplesse radiale de la roue suffisante pour filtrer notamment les chocs dus au roulement, c'est-à-dire que l'effet de suspension n'est pas suffisamment pris en compte.

Le but principal de l'invention est de pallier notamment cet inconvénient, et l'invention propose à cet effet une roue élastique qui est caractérisée en ce que des moyens de renfort sont noyés dans les plots et agencés de manière à ce que le matériau des plots travaille en mode de cisaillement dans une direction radiale perpendiculaire à l'axe de l'essieu pour augmenter la souplesse des plots dans cette direction et en mode de compression dans une direction transversale parallèle à l'axe de l'essieu pour réduire la souplesse des plots dans cette direction.

D'une manière préférentielle, les moyens de renfort de chaque plot sont constitués par des armatures internes et externes respectivement situées au voisinage des deux faces du plot qui sont en regard de la jante et du bandage de la roue.

Selon une autre caractéristique de l'invention, chaque armature interne et externe comporte des dents qui pénètrent à l'intérieur du plot, les dents des armatures internes et externes étant décalées les unes par rapport aux autres dans la direction circonférentielle de la roue.

Selon une autre caractéristique de l'invention, des ouvertures traversent de part en part chaque plot suivant un axe perpendiculaire à l'axe de la roue, chaque ouverture étant ménagée entre les dents de chaque armature interne et/ou externe et présente une section droite de forme sensiblement trapézoïdale.

Selon un premier mode de réalisation de l'invention, chaque armature interne et externe a une section droite en forme de U, les ailes de chaque armature formant une dent.

En variante, les armatures internes et/ou les armatures externes sont formées d'une seule pièce.

Dans ce cas, selon un second mode de réalisation de l'invention, l'armature interne et/ou l'armature externe présente globalement une forme ondulée, les ondulations qui pénètrent à l'intérieur du plot formant des dents creuses, alors que selon un troisième mode de réalisation de l'invention, les dents sont pleines.

Selon un avantage de l'invention, les plots peuvent être mis en place sur les roues existantes à la place des plots actuels sans nécessiter une quelconque adaptation pour leur montage.

Selon un autre avantage de l'invention, les caractéristiques fonctionnelles des plots permettent de réduire notablement les vibrations dues au contact fer sur fer des roues sur le rail, d'augmenter la stabilité latérale du véhicule et de réduire le bruit de crissement des roues.

D'autres avantages, caractéristiques et détails de l'invention ressortiront de la description explicative qui va suivre faite en référence aux dessins annexés, donnés uniquement à titre d'exemple et dans lesquels :
- la figure 1 est une vue en coupe transversale d'une roue élastique avec des plots intercalés entre la jante et le bandage de la roue selon l'art antérieur, et
- les figures 2 à 4 sont des vues en coupe transversale des plots d'une roue élastique selon trois modes de réalisation de l'invention, respectivement.

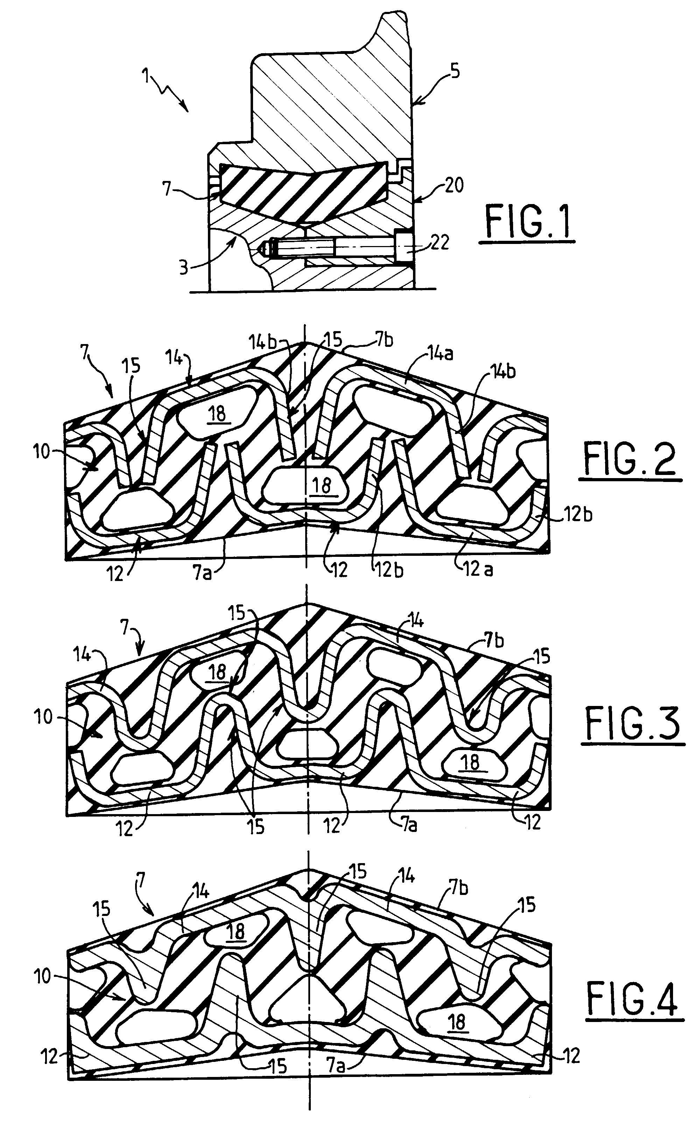

La figure 1 illustre l'art antérieur et représente une roue élastique 1 pour un véhicule ferroviaire urbain, par exemple. Cette roue 1 comprend une jante métallique 3 et un bandage métallique de roulement 5 rapporté autour de la jante 3 avec interposition de plots 7 régulièrement répartis autour de la jante 3 et qui sont insérés à force dans la jante et dans le bandage. Chaque plot a une forme globalement parallélépipédique rectangle, et est légèrement incurvé en direction de la jante 3. Selon l'art antérieur, les plots 7 sont constitués en un matériau élastomère, en particulier du caoutchouc, avec les inconvénients mentionnés en préambule.

D'une manière générale et selon l'invention, il est prévu des moyens de renfort 10 qui sont noyés dans les plots 7 et agencés de manière à ce que l'élastomère de chaque plot puisse travailler en mode de cisaillement dans une direction radiale perpendiculaire à l'axe de l'essieu et en mode de compression dans une direction transversale parallèle à l'axe de l'essieu.

Ces moyens de renfort 10 vont être décrits plus en détail ci-après sur la base de trois modes de réalisation.

Selon un premier mode de réalisation illustré à la figure 2, les moyens de renfort 10 sont constitués par des armatures internes 12 et externes 14 situées respectivement au voisinage des deux faces 7a et 7b de chaque plot 7, qui sont en regard de la jante 3 et du bandage 5.

Chaque armature interne 12 et externe 14 a une section droite en forme de U avec une paroi de fond 12a, 14a et deux ailes 12b, 14b.

Ces armatures 12 et 14 sont noyées dans chaque plot 7 et sont agencées de manière à ce que :
- la paroi de fond 12a des armatures internes 12 s'étend sensiblement parallèlement à la face 7a du plot 7 situé en regard de la jante 3, alors que les deux ailes 12b sont tournées vers l'intérieur du plot 7, et
- d'une manière analogue, la paroi de fond 14a des armatures externes 14 s'étend sensiblement parallèlement à la face 7b de chaque plot 7 situé en regard du bandage 5, alors que les deux ailes 14b sont tournées vers l'intérieur du plot 7.

D'une manière générale, chacune des ailes 12b et 14b des armatures 12 et 14 forme une dent 15, et les armatures 12 et 14 sont positionnées dans chaque plot 7, de manière à ce que les dents 15 d'une armature interne 12 soient décalées par rapport aux dents 15 d'une armature externe 14 et non situées en regard les unes des autres dans la direction circonférentielle de la roue 1.

En outre, chaque plot 7 est traversé par plusieurs ouvertures 18 qui sont chacune percées suivant un axe sensiblement perpendiculaire à l'axe de la roue 1. Une ouverture 18 est par exemple prévue entre les deux ailes de chaque armature interne 12 et externe 14, et a une section droite de forme trapézoïdale. Ainsi, une ouverture 18 associée à une armature interne 12 se trouve sensiblement en regard d'une dent 15 d'une armature externe 14, et vice versa.

Selon un second mode de réalisation illustré à la figure 3, les moyens de renfort de chaque plot 7 sont constitués par une seule armature interne 12 et une seule armature externe 14. Ainsi, chaque armature est de forme globalement ondulée, les ondulations tournées vers l'intérieur du plot 7 formant chacune une dent creuse 15.

A titre de comparaison, ce second mode de réalisation correspond à une variante du premier mode de réalisation où les deux ailes 12b adjacentes de deux armatures consécutives internes 12 seraient réunies l'une à l'autre, ainsi que les deux ailes 14b adjacentes de deux armatures consécutives externes 14.

Les dents creuses 15 de l'armature interne 12 et de l'armature externe 14 sont également décalées les unes par rapport aux autres dans la direction circonférentielle de la roue 1, et une ouverture 18 également prévue entre deux dents consécutives 15 de l'armature interne 12 et entre deux dents consécutives 15 de l'armature externe 14.

Selon un troisième mode de réalisation illustré à la figure 4, les armatures internes 12 forment également une seule pièce, ainsi que les armatures externes 14. Cependant, par rapport au second mode de réalisation, les dents 15 tournées vers l'intérieur sont des dents pleines, et il est également prévu des ouvertures 18 agencées d'une façon similaire à celles envisagées pour les deux autres modes de réalisation.

Les dents 15 qui sont respectivement prévues sur les armatures internes 12 et externes 14, offrent également l'avantage de constituer un dispositif de sécurité dans le cas où le matériau élastomère d'un plot 7 viendrait à subir une détérioration, ces dents 15 venant alors s'imbriquer les unes dans les autres.

Les armatures internes 12 et externes 14 sont noyées dans les plots 7 lors des opérations de fabrication par moulage, par exemple, mais on peut envisager de fabriquer ces plots 7 en plusieurs pièces directement emboîtées les unes dans les autres. Les armatures 12 et 14 sont métalliques ou en un matériau composite.

D'une manière générale, les plots 7 sont mis en place entre la jante 3 et le bandage 5 en leur appliquant une pré-compression dans le sens radial afin que lors de la mise en charge du véhicule et de l'application des efforts dynamiques, les plots 7 diamétralement opposés à ceux soumis à la charge ne soient pas totalement libérés. Ainsi, il n'y a pas apparition d'un jeu entre ces plots 7 diamétralement opposés et l'ensemble jante 3-bandage 5 ou tout au moins d'une diminution trop importante de la pression de maintien en place de ces plots.

Concrètement, le maintien en place des plots 7 est uniquement obtenu par un effet de friction caoutchouc/métal sans nécessiter la présence d'un système de fixation. La précontrainte appliquée pour la mise en place des plots 7 est obtenue par l'intermédiaire d'un anneau mobile 20 qui est rendu solidaire de la jante 3 au moyen de boulons 22, comme cela est schématisé à la figure 1.

L'invention n'est pas limitée aux modes de réalisation précédemment décrits. En particulier, on peut envisager de réaliser un dispositif du type continu où l'ensemble des plots ne formerait qu'une pièce monobloc. Avantageusement, lors de la fabrication, l'élastomère des plots est adhérisé aux armatures.

## Revendications

1. Roue élastique, en particulier pour véhicule ferroviaire urbain, cette roue étant constituée d'une jante (3) entourée d'un bandage (5), ces deux éléments (3, 5) étant solidarisés entre eux par des plots (7) régulièrement répartis autour de la jante (3), insérés à force dans la jante (3) et dans le bandage (5), et qui sont fabriqués en un matériau présentant des propriétés élastiques, caractérisée en ce que des moyens de renfort (10) sont noyés dans les plots (7) et agencés de manière à ce que le matériau des plots (7) travaille en mode de cisaillement dans une direction radiale perpendiculaire à l'axe de l'essieu pour augmenter la souplesse des plots dans cette direction et en mode de compression dans une direction transversale parallèle à l'axe de l'essieu pour réduire la souplesse des plots dans cette direction.

2. Roue élastique selon la revendication 1, caractérisée en ce que les moyens de renfort (10) de chaque plot (7) sont constitués par des armatures internes (12) et externes (14) respectivement situées au voisinage des deux faces (7a, 7b) du plot (7) qui sont en regard de la jante (3) et du bandage (5) de la roue.

3. Roue élastique selon la revendication 2, caractérisée en ce que chaque armature interne (12) et externe (14) comporte des dents (15) qui pénètrent à l'intérieur du plot (7), les dents (15) des armatures internes (12) étant décalées par rapport aux dents (15) des armatures externes (14) dans la direction circonférentielle de la roue.

4. Roue élastique selon la revendication 3, caractérisée en ce que des ouvertures (18) traversent de part en part chaque plot (7) suivant un axe perpendiculaire à l'axe de la roue, une ouverture (18) étant ménagée entre deux dents consécutives (15) de chaque armature interne (12) et de chaque armature externe (14).

5. Roue élastique selon la revendication 4, caractérisée en ce que chaque ouverture (18) a une section droite de forme trapézoïdale.

6. Roue élastique selon l'une quelconque des revendications 3 à 5, caractérisée en ce que chaque armature interne (12) et externe (14) a une section droite en forme de U, les ailes (12b, 14b) de chaque armature (12, 14) formant une dent (15).

7. Roue élastique selon l'une quelconque des revendications 3 à 5, caractérisée en ce que l'armature interne (12) et/ou l'armature (14) est formée d'une seule pièce.

8. Roue élastique selon la revendication 7, caractérisée en ce que les dents (15) de l'armature interne (12) et/ou de l'armature externe (14) sont creuses, l'armature ayant globalement une forme ondulée.

9. Roue élastique selon la revendication 7, caractérisée en ce que les dents (15) de l'armature interne (12) et/ou externe (14) sont pleines.

10. Roue élastique selon l'une quelconque des revendications précédentes, caractérisée en ce que l'ensemble des plots (7) forme un ensemble continu rapporté autour de la jante (3).

11. Roue élastique selon l'une quelconque des revendications précédentes, caractérisée en ce que les armatures (12, 14) sont métalliques ou en un matériau composite, et en ce que le matériau constituant les plots (7) est adhérisé aux armatures.
